# EUROPEAN PATENT SPECIFICATION

(11) **EP 4 278 432 B1**
(45) Date of publication and mention of the grant of the patent: **25.03.2026**
(21) Application number: 21919210.1
(22) Date of filing: 14.01.2021
(51) Int. Cl.: H02S 20/00, H02S 50/10

(54) **A PHOTOVOLTAIC SYSTEM FOR PROVIDING FULL AUTONOMY POWER TO A BASE TRANSCEIVER STATION**
FOTOVOLTAISCHES SYSTEM ZUR BEREITSTELLUNG VON VOLLER AUTONOMIELEISTUNG FÜR EINE SENDER-EMPFÄNGER-BASISSTATION
SYSTÈME PHOTOVOLTAÏQUE PERMETTANT DE FOURNIR DE L'ÉNERGIE EN TOUTE AUTONOMIE À UNE STATION ÉMETTRICE-RÉCEPTRICE DE BASE

(43) Date of publication of application: 22.11.2023
(73) Proprietor: ODEH ASALEM AUTOMATION SYSTEMS- ODASCO (LLC), Dubai, 31261 (AE)
(72) Inventor: SAAD MOH'D AL-ABED, Yahia, Dubai, 31261 (AE)
(74) Representative: Chas. Hude A/S
(86) International application number: PCT/IB2021/050239
(87) International publication number: WO 2022/153081

(56) References cited:
- WO-A1-2020/034025
- JP-A- 2010 056 109
- JP-A- H0 888 389
- KR-A- 20120 012 924
- US-A1- 2013 000 632
- US-A1- 2013 118 555
- US-A1- 2017 226 986
- US-A1- 2018 238 305

## Description

### FIELD OF INVENTION

The embodiments herein generally relates to power generating systems. More particularly, the invention relates to a photovoltaic system for providing full autonomy power to space constraint locations, example a base transceiver station in urban areas.

### BACKGROUND AND PRIOR ART

The off-grid sites in remote areas possess large site dimension and space to install solar panels totally on ground. However, there are lot of sites in urban area as well as in remote areas with smaller dimension and limited foot print on ground. Therefore, installation of the solar panels on such sites for power generation needs to meet the space and structural design constraints. In order to meet the space constraints, the solar panels can be mounted on towers.

Conventionally, the solar panels are mounted on the poles for providing power to street lights. Similarly, the solar panels can be used as power generation systems in telecommunication field, wherein the solar panel can be mounted on the pole or tower. However, the solar panels mounted on the towers face challenges in terms of shade effect and orientation. The shaded solar panels causes dramatic deficiency in overall performance of the power generation system. In conventional photovoltaic systems, when the solar panel is fully shaded the degradation in performance is not limited to shaded panel only but is extended to the entire photovoltaic string. Furthermore, none of the conventional photovoltaic systems supply full 100% energy coverage. A prior art solar system is provided in document US 2017/226986 A1.

Furthermore, in order to meet tower structural requirements and constraints, the solar panels tilt angle is made 0 degree to minimize wind force effect on the tower. This jeopardizes the performance of the power generation system. Moreover, the inclined solar panels do resist sand and dust blocks, while flat solar panels (i.e. tilt 0 degree) do not resist the drag effect. Moreover, the solar panels at 0 degree eliminates the wind drag effect on the tower.

Traditionally, the generators are connected to base transceiver stations for providing power. However, in such base transceiver stations there is a risk of power failure due to generator mechanical failure, fuel tank getting emptied or any fuel logistic failure. Further, the use of diesel generator leads to high cost than using normal power. In addition, utilization of the generator triggers pollution factors and noise.

US 9,196,770 B2 (Pole-mounted power generation systems, structures and processes) proposes solar power systems and structures that are mountable to a power distribution structure, e.g. a power pole or tower, which supports alternating current (AC) power transmission lines. An exemplary power generation structure is fixedly attached to and extends from the power distribution structure, and comprises a mounting rack. A Solar array, comprising at least one solar panel, is affixed to the mounting rack. A DC to AC invertor is connected between the DC outputs of the solar array and the AC power transmission lines. The length of the solar array is generally in alignment with the power distribution structure, and the width of the solar array is greater than half the circumference of the power distribution structure. The mounting rack and solar array may preferably be rotatable, such as based on any of location, time of day, or available light. However, the system appears to be complex in structure and utilizes additional rotation mechanisms for rotating solar panels. Further, the solar power systems may not be capable of ensuring a 100% total connected load generation.

CN109763689 (Single tube communication tower with solar power generation device) discloses a single tube communication tower with a solar power generation device. The single tube communication tower with the solar power generation device comprises a lightning conductor, a fixing base, a communication tower body, a bracket, an antenna, a threading hole, a pay-off rack and a solar power generator; the fixing base is fixedly arranged on the ground; the communication tower body is fixedly arranged on the fixing base; the threading hole for a communication wire to penetrate through is formed in the lower end of the communication tower body; the pay-off rack for the communication wire to be fixedly arranged is arranged in the communication tower body; the communication wire is fixed by the pay-off rack after entering the communication tower body via the threading hole; the bracket is arranged on the communication tower body; the antenna is mounted on the bracket; and the solar power generator is arranged on the bracket. However, the solar generators are kept flat which reduces the performance of the power generation system. Further, the solar power generation device may not be capable of ensuring a 100% total connected load generation.

Presently, the performance of the photovoltaic systems is affected by shade effect and position of the photovoltaic modules. Therefore there is a need to develop a photovoltaic system for providing full autonomy power to the base transceiver station and thereby eliminating the usage of the generator. Further, there is a need to develop a photovoltaic system by positioning the solar panels in such a way to reduce the shade effect and thereby enhancing the system performance.

### OBJECTS OF THE INVENTION

Some of the objects of the present disclosure are described herein below:
A main object of the present invention is to develop a photovoltaic system for providing power to space constraint locations and more particularly, to base transceiver station and thereby eliminating the usage of the generator.

Another object of the present invention is to develop a photovoltaic system for space constraint locations and which is capable of 100% power generation with higher autonomy period.

Another object of the present invention is to develop a photovoltaic system which is capable of producing over 120kWh/day over 6 sq. Mtrs area.

Another object of the present invention is to provide a photovoltaic system by placing the solar panels in such a way as to reduce the shade effect and overcome the drop of generation due to umbrella effect in order to enhance the system performance.

Still another object of the present invention is to provide a photovoltaic system integrated with optimizers and bifacial solar panels and thereby ensuring that the shaded solar panels are optimized and overall efficiency is increased.

Yet another object of the present invention is to develop a software assistant tool for pre-design verification of the photovoltaic system.

Another object of the present invention is to provide a photovoltaic system with a remote monitoring system and an unique energy management and monitoring system.

Another object of the present invention is to provide a photovoltaic system with a battery having improved autonomy and life span.

The other objects and advantages of the present invention will be apparent from the following description when read in conjunction with the accompanying drawings, which are incorporated for illustration of preferred embodiments of the present invention and are not intended to limit the scope thereof.

### SUMMARY OF THE INVENTION

In view of the foregoing, an embodiment herein provides a photovoltaic system by placing the solar panels in such a way that helps in gain of generation during winters and which can cause Umbrella effect in summer season. The production in Further, the photovoltaic modules are developed for providing power to space constraint locations such as a base transceiver station in urban areas and thereby eliminating the dependency on any alternate power source such as generator set.

According to an embodiment, the photovoltaic system for providing power to a base transceiver station, wherein the photovoltaic system comprising of a tower, a ring bracket, plurality of solar panels, plurality of solar frames, a cable tray, a combiner box, plurality of optimizer, a cable ladder, a main electrical panel, a battery system, a remote monitoring system and an energy management and monitoring system.

According to an embodiment, the ring bracket is placed in layers and circumferentially around the tower using fastening means. The ring bracket is positioned around the tower at a pre-determined distance from the ground level and thereby forming the first layer. Further, the ring brackets are placed above the first layer in sequential top order up to seven layers and thereby forming second layer, third layer, fourth layer, fifth layer, sixth layer, seventh layer and eighth layer. The number of layers depends on the length of the tower and sizing of the system. The ring bracket at each layer of the tower is separated from each other by a predetermined distance. The ring bracket at each layer includes a base plate and a top plate. According to an embodiment, the pre-determined distance is in a range from 2.7m to 3m.

According to an embodiment, the solar frame is attached to the ring brackets positioned in layers using fastening means. Specifically, the solar frame is mounted between the base plate and top plate of the ring bracket using the fastening means. The solar frame at each layer includes an angular arm portion, a flat stand and a main body. According to an embodiment, the angular arm portion includes a left angular arm and a right angular arm. According to an embodiment, one end of the left and right angular arm is fixed to the main body of the solar frame and opposite end of the left and right angular arm of the angular arm portion of the solar frame is mounted in between the base plate and top plate of the ring brackets.

The solar frame at each layer is in a shape of a fan blade. The main body of said solar frame is provided in a rectangular shape. The solar panel includes plurality of photovoltaic modules. According to an embodiment, the solar panel mounted over the main body of the solar frame positioned in layers for generating direct current electricity. Each of the photovoltaic module is provided with an optimizer. According to an embodiment, each of said optimizer is inter-connected in series using a cable.

According to an embodiment, the layers in odd position is provided with three solar frames. According to an embodiment, the second layer, fourth layer and sixth layer in even position are provided with two solar frames. According to an embodiment, the eighth layer provided with a single solar frame. The solar panel mounted over the solar frames are bifacial solar panels embedded with half cut cell technology. The Orientation of the panels is to be selected taking into account the Azimuth of the Sun in summers and winters. Solar systems generate higher energy in summers when compared to winters due to irradiation levels and climatic conditions. During summer, due to the sun's azimuth, the panels vertically placed cause shading on the panels below at 12 noon. This effect is termed and referred to as Umbrella Effect. This specific orientation has been implemented although it causes Umbrella Effect in summers, this orientation allows the system to have an increased Gain in energy in winter as Umbrella Effect doesn't occur in winter in this particular orientation.

According to an embodiment, the flat stand is provided between the left angular arm and right angular arm. The flat stand is configured for placing the combiner box vertically upwards at the angular arm portion of the solar frame closer to the ring bracket.

According to an embodiment, the combiner box provided vertically upwards at the angular arm portion of a single solar frame at each layer and closer to the ring bracket. According to an embodiment, the cable tray is placed closer to each of the ring brackets separately. The cable tray is configured for acting as a pathway for passing a string from the optimizer and thereby connecting said string to the combiner box. The combiner box at each layer is configured for combining the strings from the optimizers into output cables.

According to an embodiment, the cable ladder includes cable cleats. The cable ladder is placed along the tower. The main electrical panel includes maximum power point tracking charge controllers and output load cables.

According to an embodiment, the cable cleats are provided for fixing output cables from each of the combiner box over the cable ladder and thereby connecting the output cables to the maximum power point tracking charge controllers of the electrical panel. The output load cables from the electrical panel are connected to input ports of the base transceiver station and thereby providing the power to the base transceiver station.

According to an embodiment, the battery system includes two battery strings with plurality of batteries, an enclosure and an air conditioning system. According to an embodiment, the enclosure includes racks and a door. According to an embodiment, the two strings of plurality of batteries is fixed on the racks of the enclosure and adjacent batteries in each of the string connected using battery jumpers. According to an embodiment, the conditioning system is placed in the door of the enclosure for enhancing the lifespan of the batteries. Two battery strings with plurality of redundant batteries includes main cables and a battery cable tray. According to an embodiment, the main cable from each of the battery string is laid through the battery cable tray and main cable is connected to the main electrical panel.

According to an embodiment, the remote monitoring system includes a supervisory control and data acquisition system for remotely monitoring the photovoltaic system. According to an embodiment, the energy management and monitoring system configured for monitoring and collecting various data from site and making it available to users through graphics and online monitoring tools and thereby enabling the management of energy resources. The energy management and monitoring system includes remote terminal unit configured for transmitting various data from site to said supervisory control and data acquisition system. According to an embodiment, various data includes data related to power source system, system storage, load and site condition.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### BRIEF DESCRIPTION OF DRAWINGS

The detailed description is set forth with reference to the accompanying figures. In the figures, the left-most digit (s) of a reference number identifies the figure in which the reference number first appears. The use of the same reference numbers in different figures indicates similar or identical items.
Fig. 1 illustrates a schematic diagram of a photovoltaic system showing ring brackets along with solar frame and solar panels mounted vertically along the tower, according to an embodiment of the present invention herein;
Fig. 2 illustrates a schematic diagram of the ring bracket of the photovoltaic system, according to an embodiment of the present invention herein;
Fig. 3 illustrates a schematic diagram of the solar frames attached to the ring brackets, according to an embodiment of the present invention herein;
Fig. 4 illustrates a schematic diagram of the solar panels mounted over the solar frames of the photovoltaic system, according to an embodiment of the present invention herein;
Fig. 5 illustrates a schematic diagram of a combiner box of the photovoltaic system, according to an embodiment of the present invention herein;
Fig. 6 illustrates a schematic diagram of a cable ladder along with cable cleats, according to an embodiment of the present invention herein;
Fig. 7 illustrates a single line drawing of the photovoltaic system, according to an embodiment of the present invention herein;
Fig. 8 illustrates a schematic diagram of an enclosure of a battery system of the photovoltaic system, according to an embodiment of the present invention herein;
Fig. 9 illustrates a schematic diagram of a single battery string with plurality of batteries placed in racks of the enclosure, according to an embodiment of the present invention herein;
Fig. 10 illustrates a schematic diagram of a proposed location in a site for placing the battery system; according to an embodiment of the present invention herein;
Fig.11 illustrates a schematic diagram of a remote monitoring system and an energy management and monitoring system, according to an embodiment of the present invention herein;
Fig.12 illustrates a schematic diagram of a remote terminal unit, according to an embodiment of the present invention herein;
Fig.13 illustrates a schematic representation showing the orientation of the solar panels and the umbrella effect during the summer, according to an embodiment of the present invention herein;
Fig.14 illustrates a schematic representation showing the orientation of the solar panels and thereby avoiding the umbrella effect during the winters, according to an embodiment of the present invention herein;
Fig.15 illustrates a graphical representation of power generation effected by the umbrella effect and its shading during summer season, according to an embodiment of the present invention herein;
Fig.16 illustrates a graphical representation of variation in power generation during winter season, according to an embodiment of the present invention herein;
Fig. 17 to Fig. 25 illustrates a diagrammatic representation of shade analysis comparison between the results obtained during simulation at offsite and actual real-time situation on site during day time 8:00 am to 4:00pm respectively, according to an embodiment of the present invention herein;
Fig.26 A illustrates a graphical representation of battery current trend during a day, according to an embodiment of the present invention herein;
Fig.26 B illustrates a graphical representation of battery current trend on a lifespan of 6 consecutive days of the first week of operation, according to an embodiment of the present invention herein;
Fig.26 C illustrates a graphical representation of battery voltage trend showing maximum and minimum voltage of battery during the life span of 6 consecutive days of the first week of operation, according to an embodiment of the present invention herein;
Fig.27 A illustrates a graphical representation of battery current trend on a lifespan of 6 consecutive days of the second week of operation, according to an embodiment of the present invention herein;
Fig.27 B illustrates a graphical representation of battery voltage trend showing maximum and minimum voltage of battery during the life span of 6 consecutive days of second week of operation, according to an embodiment of the present invention herein;
Fig.28 A illustrates a graphical representation of battery current trend after system shutdown, according to an embodiment of the present invention herein;
Fig.28 B illustrates a graphical representation of battery voltage trend after system shutdown, according to an embodiment of the present invention herein; and
Fig.28 C illustrates a graphical representation of state of charge of batteries, according to an embodiment of the present invention herein;

### DETAILED DESCRIPTION OF THE PREFERRED EMBODIMENTS

The embodiments herein and the various features and advantageous details thereof are explained more fully with reference to the non-limiting embodiments and detailed in the following description. Descriptions of well- known components and processing techniques are omitted. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

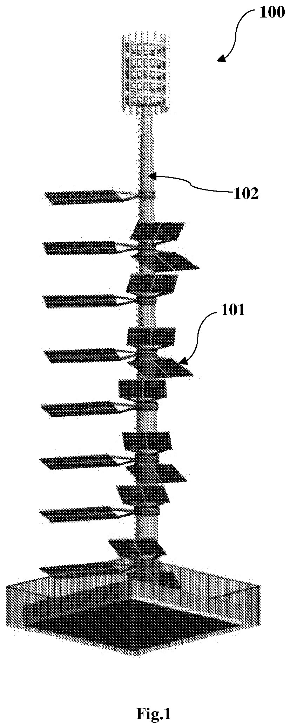

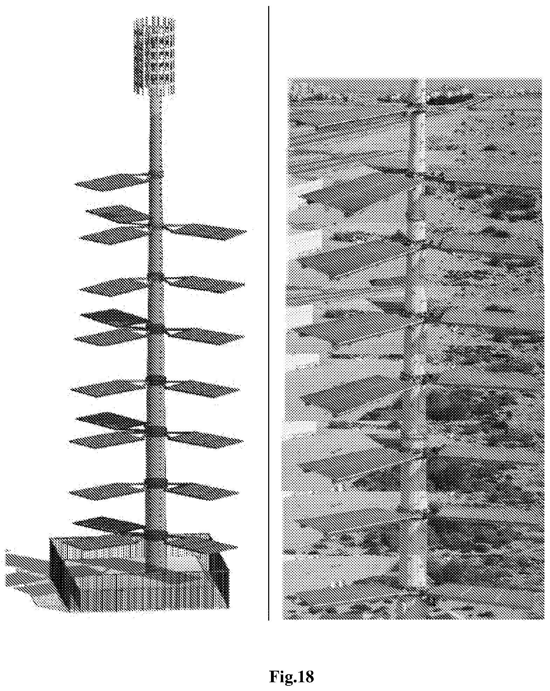

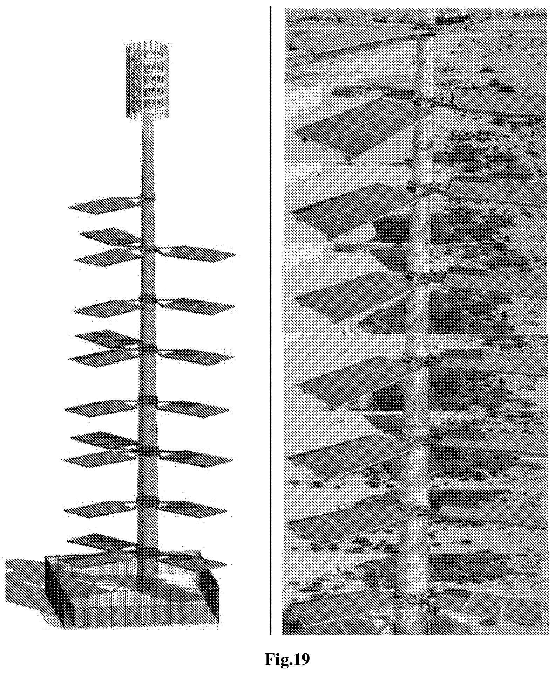

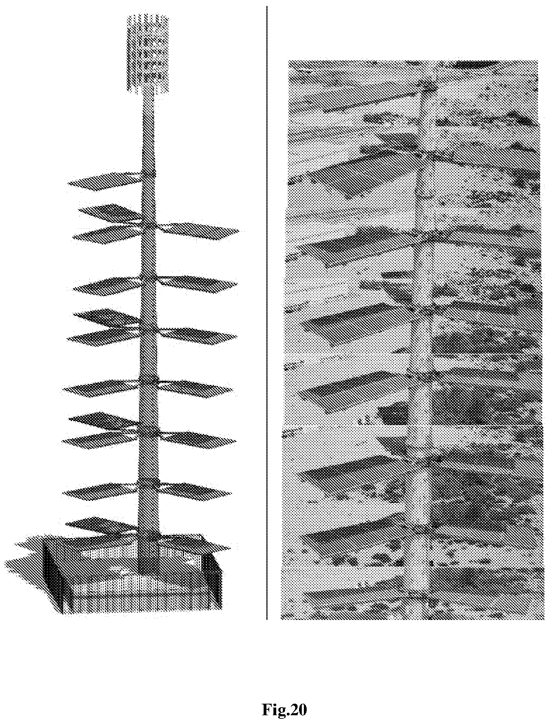

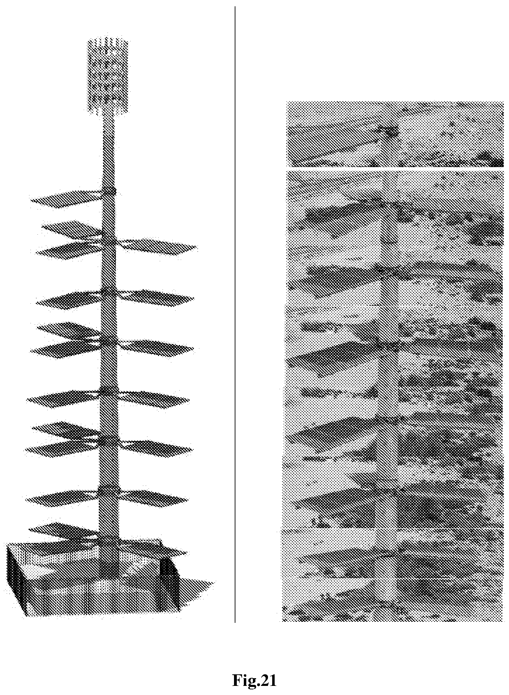

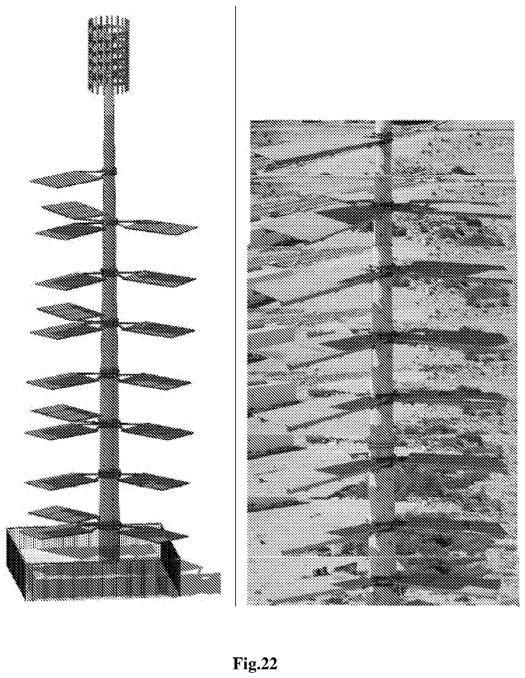

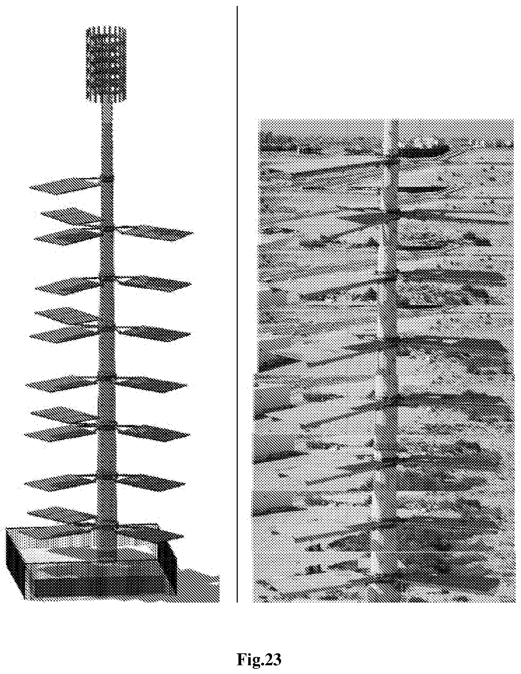

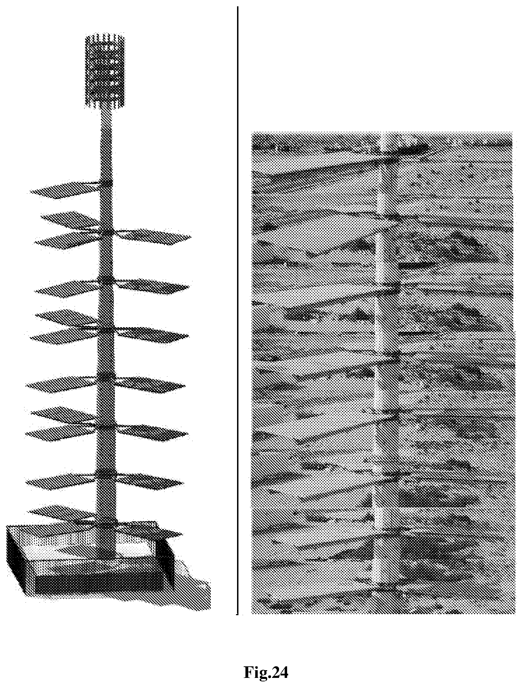

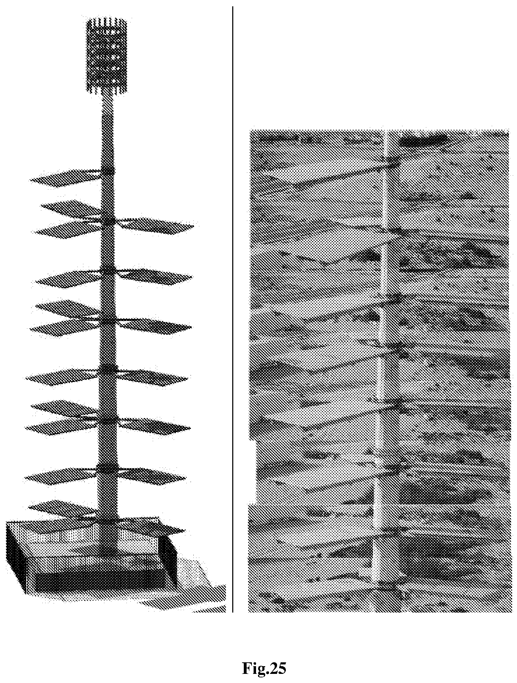

As mentioned above, there is a need to develop a photovoltaic system for providing power to the space constraint locations and more particularly to the base transceiver stations in urban areas and thereby eliminating the usage of generator. The photovoltaic system is capable of providing power to locations which includes but not limited to base transceiver stations and radio poles. Further, there is a need to develop a photovoltaic module with high performance. The embodiments herein achieve this by implementing the optimizer in each photovoltaic module and also by utilizing bifacial solar panel embedded with half cut cell technology. Referring now to the drawings, and more particularly to Fig.1 through Fig. 28C, where similar reference characters denote corresponding features consistently throughout the figures, there are shown preferred embodiments.

Fig. 1 illustrates a schematic diagram of a photovoltaic system 100 showing ring brackets along with solar frame and solar panels 101 mounted vertically along the tower 102, according to an embodiment of the present invention herein. According to an embodiment, the photovoltaic system 100 for providing power to a base transceiver station, wherein the photovoltaic system 100 comprising of a tower 102, a ring bracket, plurality of solar panels 101, plurality of solar frames, a cable tray, a combiner box, plurality of optimizer, a cable ladder, a main electrical panel, a battery system, a remote monitoring system and an energy management and monitoring system.

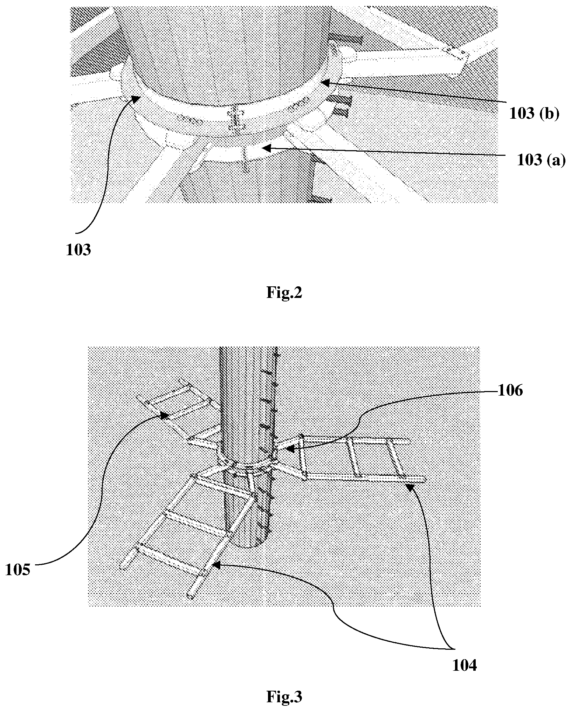

Fig. 2 illustrates a schematic diagram of the ring bracket 103 of the photovoltaic system 100, according to an embodiment of the present invention herein. According to an embodiment, the ring bracket 103 is placed in layers and circumferentially around the tower 102 using fastening means. According to an embodiment, the tower 102 is a monopole. The ring bracket 103 is positioned around the tower 102 at a pre-determined distance from the ground level and thereby forming the first layer. Further, the ring brackets 103 are placed vertically above the first layer in a sequential top order up to seven layers and thereby forming second layer, third layer, fourth layer, fifth layer, sixth layer, seventh layer and eighth layer. The number of layers depends on the length of the tower or pole and the sizing of the system. The ring bracket 103 at each layer of the tower 102 is separated from each other by a predetermined distance. The ring bracket 103 at each layer includes a base plate 103 (a) and a top plate 103 (b). According to an embodiment, the pre-determined distance is in a range from 2.7m to 3m.

Fig. 3 illustrates a schematic diagram of the solar frames 104 attached to the ring brackets 103, according to an embodiment of the present invention herein. According to an embodiment, the solar frame 104 is attached to the ring brackets 103 positioned in layers using fastening means. Specifically, the solar frame 104 is mounted between the base plate 103 (a) and top plate 103 (b) of the ring bracket 103 using the fastening means. The fastening means includes but not limited to end clamp, middle clamp, rail clamp, leg base, front/rear leg, rail, rail connection and ground screw. The solar frame 104 at each layer includes an angular arm portion 106, a flat stand 107 and a main body 105. According to an embodiment, the angular arm portion 106 includes a left angular arm and a right angular arm. According to an embodiment, one end of the left and right angular arm is fixed to the main body 105 of the solar frame 104 and opposite end of the left and right angular arm of the angular arm portion 106 of the solar frame 104 is mounted in between the base plate 103 (a) and top plate 103 (b) of the ring brackets 103. The solar frame 104 at each layer is in a shape of a fan blade. The main body 105 of said solar frame 104 is provided in a rectangular shape.

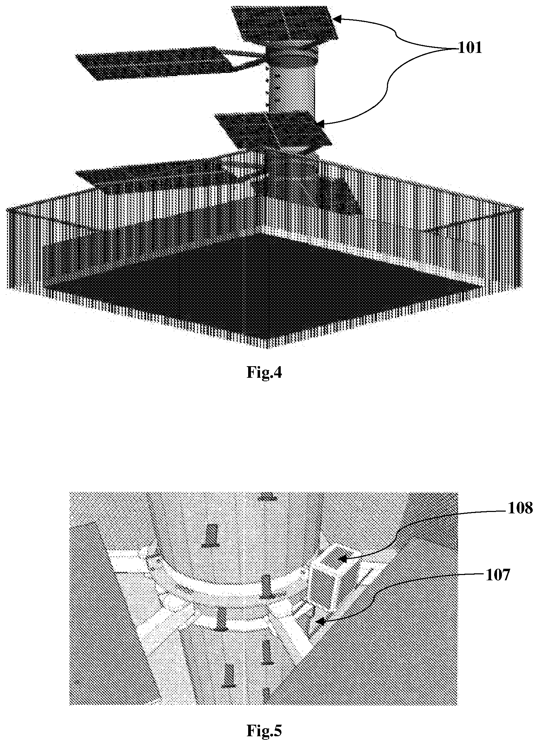

Fig. 4 illustrates a schematic diagram of the solar panels 101 mounted over the solar frames 104 of the photovoltaic system 100, according to an embodiment of the present invention herein. According to an embodiment, the solar panels 101 mounted over the main body 105 of the solar frame 104 positioned in layers for generating direct current electricity. The solar panels 101 are mounted or arranged in such a way to reduce the shading effect or umbrella effect. The solar panel 101 includes plurality of photovoltaic modules. Each of the photovoltaic module is provided with an optimizer. According to an embodiment, each of said optimizer is inter-connected in series using a cable.

According to an embodiment, the layers in odd position is provided with three solar frames 104. According to an embodiment, the second layer, fourth layer and sixth layer in even position are provided with two solar frames 104. According to an embodiment, the eighth layer is provided with a single solar frame.

. The solar panel 101 which is composed of photovoltaic modules are bifacial solar panels embedded with half cut cell technology. In order to limit the shade effect within any photovoltaic (PV) module, a half-cut cell PV has been selected. Each photovoltaic module is divided to form six equal parts. Half-cell modules have solar cells that are cut in half, which improves the modules performance and durability. When solar cells are halved, their current is also halved, so resistive losses are lowered and the cells can produce a little more power. Smaller cells experience reduced mechanical stresses, so there is a decreased opportunity for cracking. Half-cell modules have higher output ratings and are more reliable than traditional panels. This technique is very efficient in case of partial shade at any single panel. This allows the system to produce power more efficiently. Moreover, as these solar panels are bifacial, the efficiency is enhanced significantly.

Furthermore, the optimizer mitigates the mismatch problems caused by Module level MPPT. In fact, just a little shade on one solar panel can reduce the output from all the panels. When solar panels are "daisy-chained", or wired together in series, shade on one panel reduces the output of the rest of the solar panels. So, by the integration of the optimizer in the photovoltaic system, the shading effect is minimized. Hence total power loss is minimized. Additionally, the optimizer allows the connection of photovoltaic modules of different orientations, angles and even string PV counts. In short, the integration of optimizers at each photovoltaic module along with the utilization of bifacial solar panel with half cut cell technology helps to reduce the shade effect.

According to an embodiment, the flat stand 107 is provided between the left angular arm and right angular arm. The flat stand 107 is configured for placing the combiner box 108 vertically upwards at the angular arm portion 106 of the solar frame 104 closer to the ring bracket 103.

Fig. 5 illustrates a schematic diagram of a combiner box 108 of the photovoltaic system 100, according to an embodiment of the present invention herein. According to an embodiment, the combiner box 108 provided vertically upwards at the angular arm portion 106 of a single solar frame at each layer and closer to the ring bracket 103.

According to an embodiment, the cable tray is placed closer to each of the ring brackets 103 separately. The cable tray is configured for acting as a pathway for passing a string from the optimizer and thereby connecting said string to the combiner box 108. The combiner box 108 at each layer is configured for combining the strings from the optimizers into output cables.

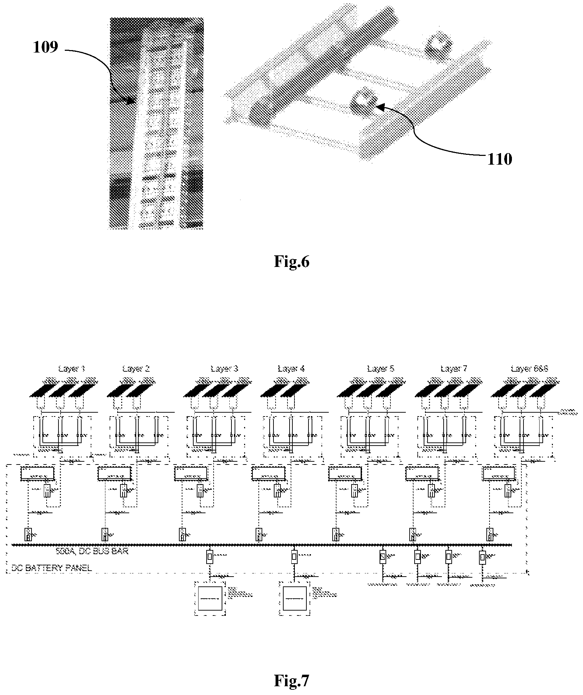

Fig. 6 illustrates a schematic diagram of a cable ladder 109 along with cable cleats 110, according to an embodiment of the present invention herein. According to an embodiment, the cable ladder 109 includes cable cleats 110. The cable ladder 109 is placed along the tower 102. The main electrical panel includes maximum power point tracking charge controllers and output load cables.

According to an embodiment, the cable cleats 110 are provided for fixing output cables from each of the combiner box 108 over the cable ladder 109 and thereby connecting the output cables to the maximum power point tracking charge controllers of the electrical panel. The output load cables from the electrical panel are connected to input ports of the base transceiver station and thereby providing the full autonomy power to the base transceiver station.

Fig. 7 illustrates a single line drawing of the photovoltaic system 100, according to an embodiment of the present invention herein. After the solar frame 104 is attached to the ring bracket 103, each solar frame 104 will be provided with the solar panels 101. Each solar frame 104 has six equal number of photovoltaic modules embedded with half-cut cell technology. Each photovoltaic module is connected to one optimizer. The optimizers are inter-connected in series making a string that matches the battery system charging voltage (48Vdc). According to an embodiment, the cable used for connecting the optimizer is a single core 4 mm². The string from the optimizer pass through the cable tray to the associated combiner box. At the combiner box which is located on the flat stand of the solar frame and closer to the ring bracket, combines two or three strings. The string from optimizer in each solar frame is connected to the combiner box fixed in each level individually. i.e., each layer consists of a single combiner box. The output cables from every combiner box are laid in the cable ladder and connected to the electrical panel. A grounding cable which is interconnected to the photovoltaic modules and the combiner box run along another cable ladder 109 which is fit along sides of the solar frames in each layer. The grounding cable is connected to the main grounding rode of the site.

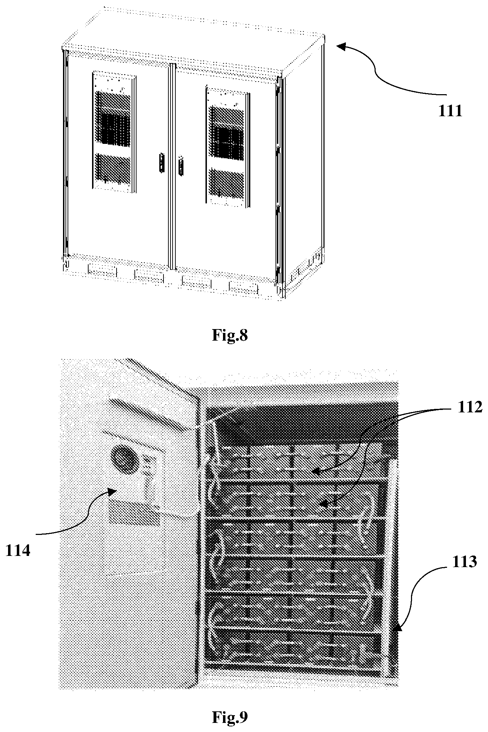

Fig. 8 illustrates a schematic diagram of an enclosure of the battery system 111 of the photovoltaic system 100, according to an embodiment of the present invention herein. According to an embodiment, the battery system 111 includes two battery strings with plurality of batteries 112, an enclosure 113 and an air conditioning system 114. According to an embodiment, there are 24 batteries in each string. The enclosure 113 includes racks and a door. According to an embodiment, the enclosure is a glass reinforced polyester enclosure.

Fig. 9 illustrates a schematic diagram of a single battery string with plurality of batteries placed in racks of the enclosure, according to an embodiment of the present invention herein. According to an embodiment, the two strings of plurality of batteries 112 is fixed on the racks of the enclosure 113 and adjacent batteries in strings are connected using battery jumpers. The battery jumpers consist of safety caps which secure the battery nodes further. According to an embodiment, the air conditioning system 114 is placed in the door of the enclosure for enhancing the lifespan of the batteries. Two battery strings with plurality of batteries includes main cables and a battery cable tray. According to an embodiment, the main cable from each of the battery string is laid through the battery cable tray and main cable is connected to the main electrical panel.

The main purpose of the enclosure is to provide a physical encapsulation and a defined thermal environment.

The main electric panel consists of various components in order to manage and control the power generated from the bifacial solar panels. The main electrical panel further includes but not limited to circuit breakers and battery fuses disconnector.

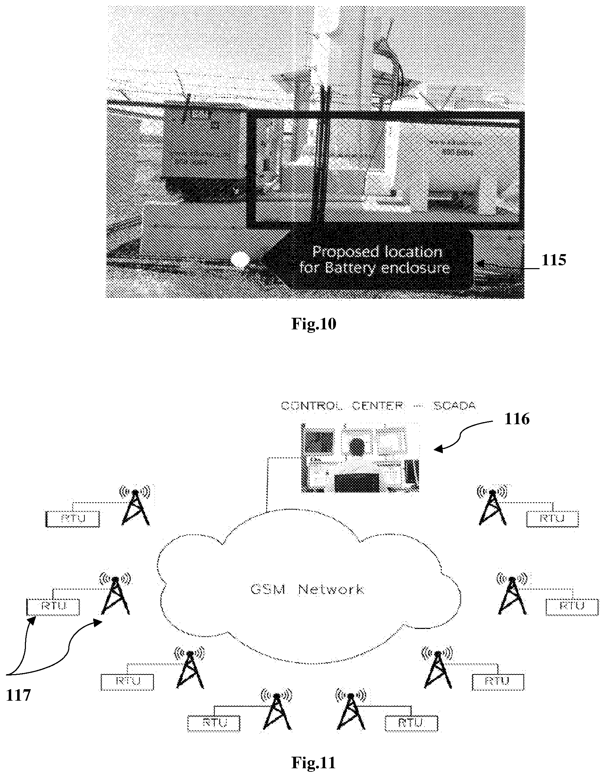

Fig.10 illustrates a schematic diagram of a proposed location 115 in a site for placing the battery system; according to an embodiment of the present invention herein. Prior to the installation or placement of the battery system, the fuel supply location is rearranged to the existing diesel generator. Further, the existing fuel tank is removed to fix the battery system.

Fig.11 illustrates a schematic diagram of a remote monitoring system (RMS) 116 and an energy management and monitoring system (EMMS) 117, according to an embodiment of the present invention herein. According to an embodiment, the remote monitoring system 116 includes a supervisory control and data acquisition system for remotely monitoring the photovoltaic system.

According to an embodiment, the energy management and monitoring system 117 configured for monitoring and collecting various data from site and making it available to users through graphics and online monitoring tools and thereby enabling the management of energy resources. The energy management and monitoring system 117 includes remote terminal unit 118 configured for transmitting various data from site to said supervisory control and data acquisition system. According to an embodiment, various data includes data related to power source system, system storage, load and site condition. The EMMS ensures reliable power system at off-grid base transceiver station site, maximizes utilization of renewable resources and reduces the operating expenditure (OPEX).

The EMMS 117 includes Remote Terminal Unit (RTU) 118, at each BTS site for local control and monitoring of individual sites. The RTU 118 is a Programmable Logic Controller (PLC) based system that represents the core part in each site, which connects and integrates all site components with each other such that all components are functioning as a single cohesive system. The RTU capacity and configuration is flexible to meet any site arrangements. Each RTU includes power supply module, central processing modules, communication modules and input/ output modules which are arranged in terms of type and quantity based on the site components arrangement.

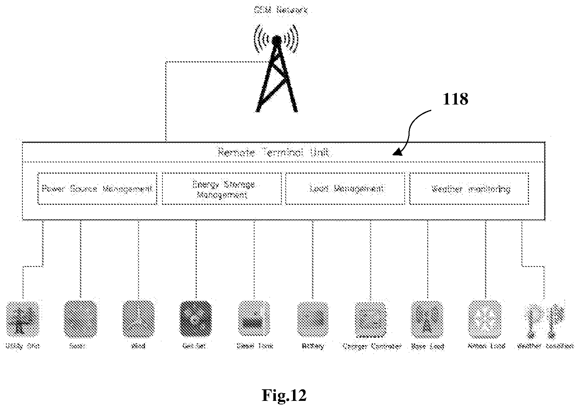

Fig.12 illustrates a schematic diagram of a remote terminal unit 118, according to an embodiment of the present invention herein. The EMMS 117 defines four main categories which all site components fall under power source, energy storage, load and site condition. The Table. 1 herein below summarizes RTU connection to main components:

**Table.1**

| **Sr No.** | **Category** | **System components** | **Monitoring** | **Management** |
|---|---|---|---|---|
| 1 | Power source system | Utility Grid | 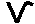 | - |
| | | Gen set | 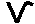 | 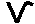 |
| | | Renewable i.e. solar and wind | 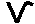 | 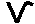 |
| | | Switching panel | 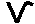 | 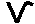 |
| 2 | System storage | Battery Banks | 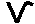 | - |
| | | Charger controller | 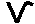 | 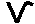 |
| 3 | Load | Base load | 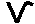 | - |
| | | Air conditioning | 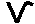 | 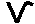 |
| 4 | Site condition | Temperature indoor and outdoor | 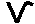 | 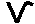 |
| | | Intrusion | 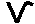 | - |

The main advantages of RTU are (i) increases power reliability via hybrid redundant power sources and real-time monitoring of power quality storage level and efficiency and fuel availability, (ii) reduces carbon omission and fuel consumption to lowest limits by improving energy flow and prioritize power resources,(iii) prioritizes power sources to reduce OPEX and site visits, (iv) extends battery life time via efficient energy flow management of charging / discharging process and real time battery monitoring, (v) ensures safe switch over between different power sources, (vi) intrusion detection, and (vii) temperature control.

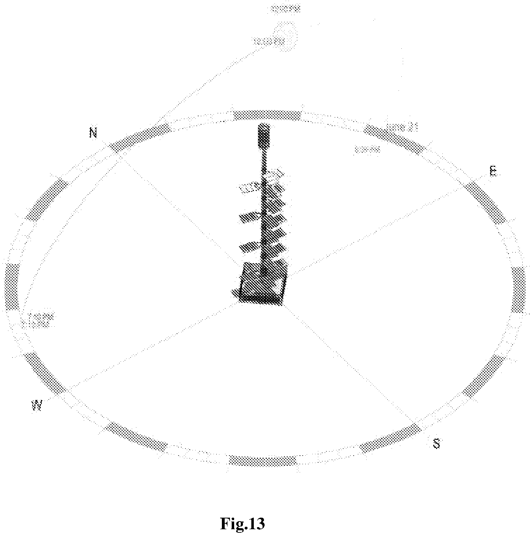

Fig.13 illustrates a schematic representation showing the orientation of the solar panels 101 which shows umbrella effect during the summers, according to an embodiment of the present invention herein. The Orientation of the panels are to be selected taking into account the Azimuth of the Sun in summers and winters. Solar systems generate higher energy in summers when compared to winters due to irradiation levels and climatic conditions. However During summer, due to the sun's azimuth, the panels vertically placed cause shading on the panels below at 12 noon. This effect is termed as Umbrella Effect. This effect has been taken into account and the system is oversized in order to overcome the drop of generation due to umbrella effect during summers, and to fulfill the required energy for the Total Connected load. Furthermore, this specific orientation has been implemented although it causes Umbrella Effect in summers, this orientation allows the system to have an increased Gain in energy in winter as Umbrella effect doesn't occur in winter in this particular orientation.

The solar panels 101 are arranged in such a way to help in gain of generation during winters, even though the shading effect is high at noon in the summer (from May till the month of August) with the same orientation. This is because the angle of the sun is perpendicular to the earth. However in this same orientation this umbrella effect is avoided in winters which helps in higher gain of energy. The right orientation and placement of solar panel in each layer is calculated with the help of the shading analysis software. As shown in the Figure 13, we can see the sun is perpendicular to the Earth's surface and the drop in curve at summer at 12 PM in the month of June.

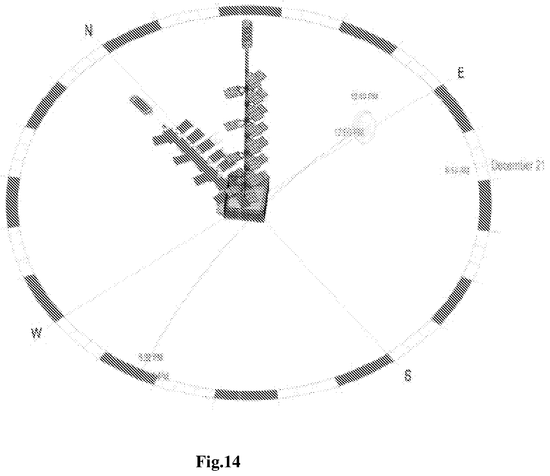

Fig.14 illustrates a schematic representation showing the orientation of the solar panels 101 and thereby avoiding the umbrella effect during the winters, according to an embodiment of the present invention herein. Normally, the solar system generate less energy in winters due to the irradiation levels and climatic conditions. Now, during winter, in the month of December, the Sun is not perpendicular to the surface of the earth. Due to the accurate placement and orientation of the solar panels in the photovoltaic system, we can use this natural phenomenon to its advantage. Though the Sun irradiation is weaker during winters, the earth is slightly curved along the sun's orbit in winters; this orientation allows the system to have an increased Gain in energy in winter as Umbrella Effect doesn't occur in winter, and hence ensuring full autonomy all through the year.

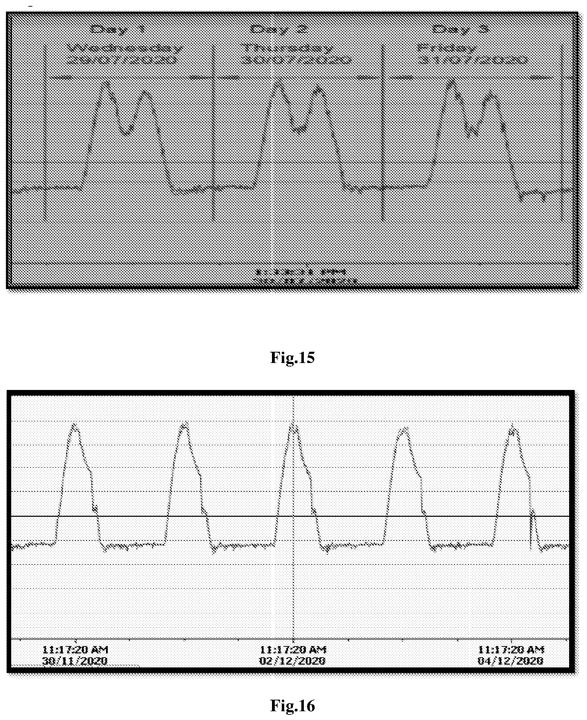

Fig.15 illustrates a graphical representation of power generation effected by the umbrella effect and its shading during summer season, according to an embodiment of the present invention herein. In the figure 15, we can notice the drop of generation due to umbrella effect during summers, this is because at noon, the sun is directly perpendicular to the tower and it generates least amount of energy due to the umbrella effect and its shading. Therefore, the solar panels are placed in accurate positions after calculating the right orientation using the shade analysis software.

Fig.16 illustrates a graphical representation of variation in power generation during winter season, according to an embodiment of the present invention herein. In the Figure 16, we can notice the drop of generation significantly less than in summer due to the Orbit of earth around the Sun is slightly curved than in summers. Since the Sun isn't exactly perpendicular to the tower, and the solar panel arranged in calculated orientation, even with lesser sun irradiation, the power generated by the system is close to the generation in summer. In short, due to the sun's orbit azimuth being in a different angle, the Umbrella effect can be avoided and maximum energy can be generated even when the solar systems tend to generate less energy in winters. With this the system is stable all throughout the year ensuring no blackout period during winters.

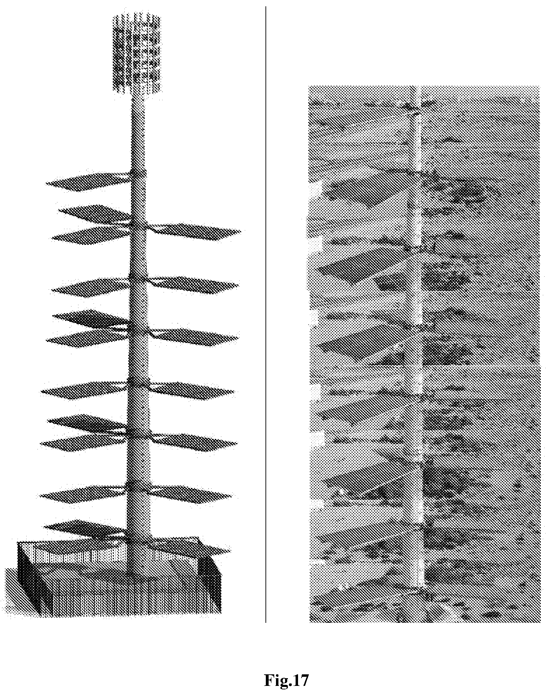

Fig. 17 to Fig. 25 illustrates a diagrammatic representation of comparison of results obtained after the shade analysis from time 8:00 am to 4:00pm. The results obtained during simulation at offsite is compared to the visuals of actual real-time situation on site during day time 8:00 am to 4:00pm respectively, according to an embodiment of the present invention herein. A software assistant tool [also referred as shade analysis software] is developed to integrate the tower and the photovoltaic modules 3D modeling, shade effect, half-cut cell and power optimizer into one plat form and thereby generating the equivalent standard design of the photovoltaic system. The software integrates the total energy output produced over every 5 minutes resolution to generate the total daily energy in KWhr. Prior to erection of every site, this process shall be conducted to verify design output.

The comparison as depicted in Fig. 17 to Fig. 25 enables the user to understand the efficiency of the system during the peak sun hours [10 am to 3 pm] and further, ascertain that the calculations during the simulation matches with the actual real-time situation on site. The drawings in the left side represents the result obtained during simulation whereas the drawings in the right side represents the real-time visuals of the photovoltaic system on the site. Table.2 herein below summarizes the observation after the comparison of shade analysis.

**Table.2**

| **Time** | **Observation** |
|---|---|
| 8:00 am | The analysis of the software compared to that on site reveals 70% similarity. Difference in the shape of the shade is observed at the back side. |
| 9:00 am | The analysis of the software compared to that on site reveals 80% similarity. Difference in the shape and location of the shade is observed. |
| 10:00 am | The analysis of the software compared to that on site reveals 80% similarity. Difference in shade shape is observed only at the solar panels at the back of the tower. |
| 11:00 am | The analysis of the software compared to that on site reveals 90% similarity. Shape of shade reveals similar on both. |
| 12:00 pm | The analysis of the software compared to that on site reveals 90% similarity. Shape of shade reveals similar on both. |
| 1:00 pm | The analysis of the software compared to that on site reveals 80% similarity. Shape of shade reveals similar on both. |
| 2:00 pm | The analysis of the software compared to that on site reveals 70% similarity. Difference in shade shape is observed on some of the panels. |
| 3:00 pm | The analysis of the software compared to that on site reveals 80% similarity. Because the top head is sketched on software slightly different, the shade penetrates different shapes on panels compared to that one on site. |
| 4:00 pm | The analysis of the software compared to that on site reveals 90% similarity. Minor difference in shape of the shade is observed. |

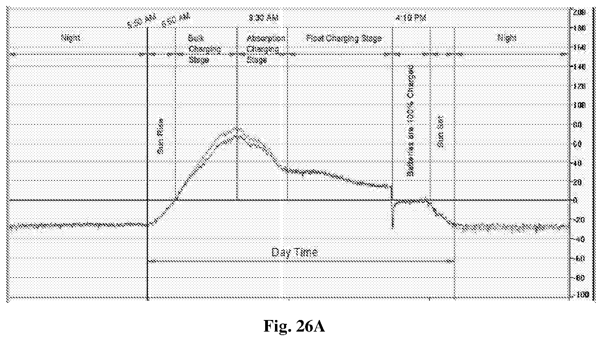

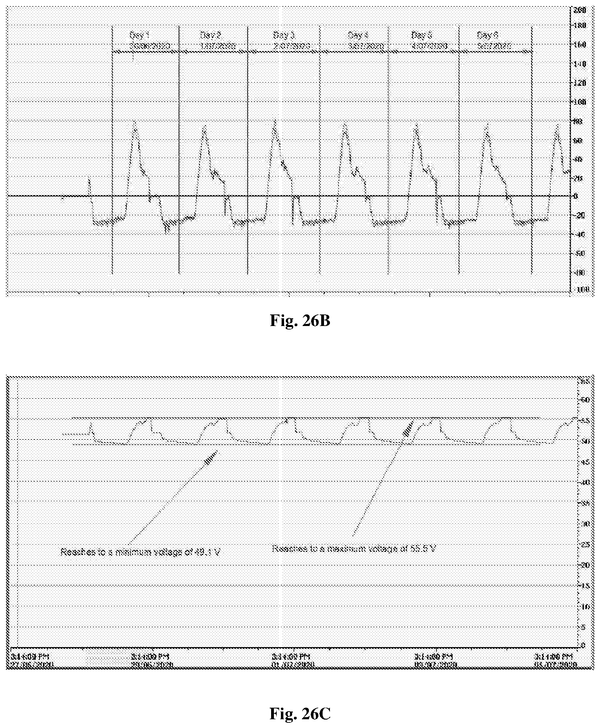

Fig.26 A illustrates a graphical representation of battery current trend during a day, according to an embodiment of the present invention herein. The graphical representation of the battery current trends shows mainly three stages namely bulk charging stage, Absorption charging stage and float charging stage. The maximum charging of batteries occurs at bulk charging stage and the batteries gets 100% charged within the end of day time. Fig.26 B illustrates a graphical representation of battery current trend on a lifespan of 6 consecutive days of the first week of operation, according to an embodiment of the present invention herein. There is a slight variation in the time required for the battery to get 100% charge at each day.

Fig.26 C illustrates a graphical representation of battery voltage trend showing maximum and minimum voltage of battery during the life span of 6 consecutive days of the first week of operation, according to an embodiment of the present invention herein. The minimum voltage reaches 49.1V and maximum voltage reaches 55.5V respectively.

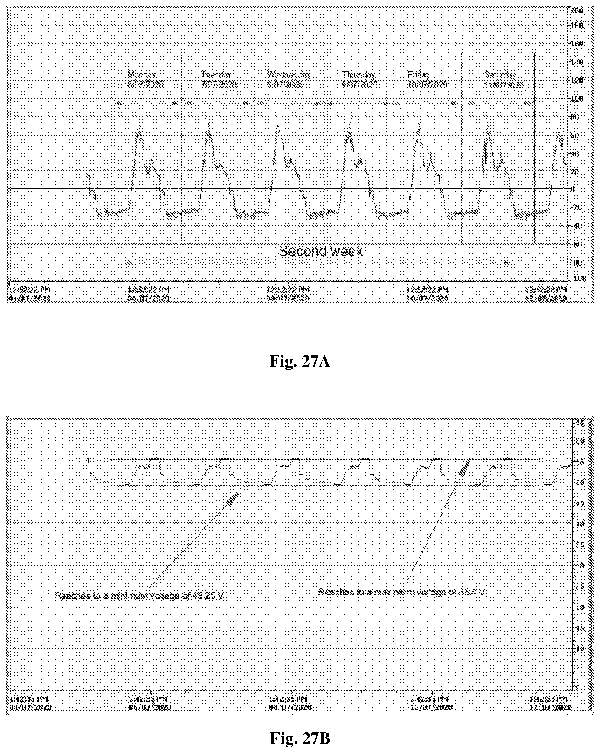

Fig.27 A illustrates a graphical representation of battery current trend on a lifespan of 6 consecutive days of the second week of operation, according to an embodiment of the present invention herein. Similar to the first week of operation, a slight difference in the time required for the battery to get 100% charge is observed on each day. Fig.27 B illustrates a graphical representation of battery voltage trend showing the maximum and minimum voltage of battery during the life span of 6 consecutive days of second week of operation, according to an embodiment of the present invention herein. The minimum voltage reaches 49.25V and maximum voltage reaches 55.4V respectively.

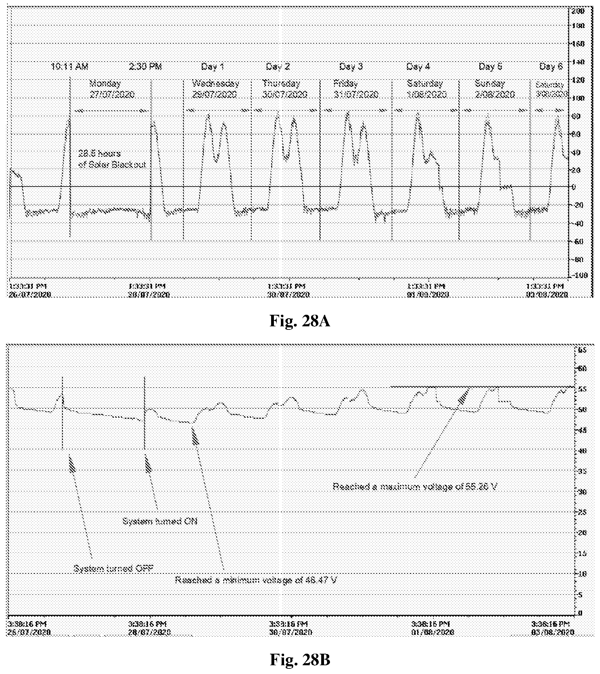

Fig.28 A illustrates a graphical representation of battery current trend after system shutdown (Experimental shutdown), according to an embodiment of the present invention herein. Solar blackout is observed for 28.5 hours. Fig.28 B illustrates a graphical representation of battery voltage trend after system shutdown (Experimental shutdown), according to an embodiment of the present invention herein. The system is turned on post-shutdown and the minimum voltage reaches 46.47V and maximum voltage reaches 55.26V respectively.

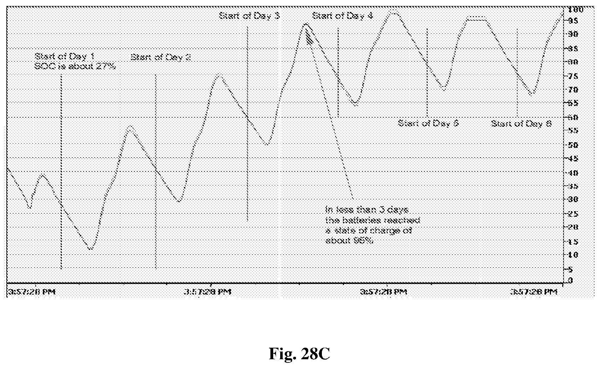

Fig.28 C illustrates a graphical representation of state of charge of batteries, according to an embodiment of the present invention herein. At starting of day 1, state of charge (SOC) is 27%. In less than three days the batteries reached a state of charge of about 95%. Hence, this experimental shutdown proves that the present invention is capable of providing more than 24 hours autonomy.

A main advantage of the present invention is that the provided photovoltaic system eliminates the usage of generator.

Still another advantage of the present invention is that the placement of the solar panels based on the orientation calculated using the shade analysis software helps to reduce the shade effect and overcome the drop of generation due to umbrella effect during summers and further avoid umbrella effect during winters and thereby enhances the system performance.

Still another advantage of the present invention is that the photovoltaic system is provided with optimizers, bifacial solar panels embedded with half cut cell technology.

Yet another advantage of the present invention is that a software assistant tool is developed for pre-design verification of the photovoltaic system.

Another advantage of the present invention is that the photovoltaic system is provided with a remote monitoring system and an energy management and monitoring system.

Another advantage of the present invention is that the photovoltaic system is provided with battery having improved autonomy and life span.

Another advantage of the present invention is that the photovoltaic system is capable of ensuring a 100% total connected load generation.

Another advantage of the present invention is that the photovoltaic system is designed to provide power to base transceiver station site considering the shortest/ lowest irradiation days in the year i.e. in December& January. Thus, no generator or any external power source is required, which eliminates the risk of power failure due to generator mechanical failure, fuel tank getting emptied or any fuel logistic failure.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the embodiments as described herein.

## Claims

1. A photovoltaic system (100) for providing full autonomy power to a base transceiver station, wherein said photovoltaic system (100) comprising of:
Plurality of solar panels (101) and solar frames (104);
**characterized in that**
wherein said photovoltaic system (100) further includes a tower (102), a ring bracket (103), a cable tray, a combiner box (108), plurality of optimizer, a cable ladder (109) and a main electrical panel;
wherein said ring bracket (103) placed in layers and circumferentially around the tower (102) using fastening means;
wherein said solar frame (104) attached to said ring brackets (103) positioned in layers using fastening means;
wherein said solar panel (101) mounted over said solar frame (104) positioned in layers for generating direct current electricity, wherein said solar panel (101) includes plurality of photovoltaic modules;
wherein solar panel (101) mounted over said solar frame (104) based on orientation calculated using a software assistant tool and thereby reducing shade effect;
wherein each of said photovoltaic module provided with an optimizer, wherein each of said optimizer inter-connected in series using a cable;
wherein said cable tray placed closer to each of said ring brackets (103) separately;
wherein said combiner box (108) located at an end of said solar frame (104) closer to the ring bracket (103);
wherein said cable tray configured for acting as a pathway for passing a string from the optimizer and thereby connecting said string to the combiner box (108);
wherein said cable ladder (109) includes cable cleats (110), wherein said cable ladder placed along the tower;
wherein said main electrical panel includes maximum power point tracking charge controllers and output load cables;
wherein said cable cleats (110) provided for fixing output cables from each of the combiner box (108) over the cable ladder (109) and thereby connecting said output cables to the maximum power point tracking charge controllers of the electrical panel; and
wherein said output load cables from the electrical panel connected to input port of the base transceiver station and thereby providing the power to the base transceiver station.

2. The photovoltaic system (100) as claimed in claim 1, wherein said solar panel (101) mounted on the solar frame (104) based on the calculated orientation for overcoming the drop of generation due to umbrella effect in summers and avoiding said umbrella effect in winters.

3. The photovoltaic system (100) as claimed in claim 1, wherein said ring bracket (103) positioned around the tower (102) at a pre-determined distance from the ground level and thereby forming the first layer,
wherein said ring brackets (103) placed vertically above the first layer in a sequential top order up to seven layers and thereby forming second layer, third layer, fourth layer, fifth layer, sixth layer, seventh layer and eighth layer and
wherein said ring bracket (103) at each layer of the tower separated from each other by a predetermined distance.

4. The photovoltaic system as claimed in claim 3, wherein said ring bracket (103) at each layer includes a base plate (103(a)) and a top plate (103(b)); and wherein said solar frame (104) mounted between the base plate (103(a)) and top plate (103(b)) of the ring bracket (103) using fastening means.

5. The photovoltaic system (100) as claimed in claim 4, wherein said solar frame (104) at each layer includes an angular arm portion (106) and a main body (105),
wherein said angular arm portion (106) includes a left angular arm and a right angular arm,
wherein one end of said left and right angular arm fixed to said main body (105) of the solar frame (104) and opposite end of said left and right angular arm of the angular arm portion (106) of the solar frame (104) mounted in between the base plate (103(a)) and top plate (103(b)) of the ring brackets (103).

6. The photovoltaic system (100) as claimed in claim 5, wherein said solar frame (104) at each layer is in a shape of a fan blade, wherein said main body (105) of said solar frame (104) provided in a rectangular shape; and wherein said solar panel (101) mounted over the main body (105) of the solar frame (104).

7. The photovoltaic system (100) as claimed in claim 6, wherein said layers in odd position provided with three solar frames; wherein said second layer, fourth layer and sixth layer in even position provided with two solar frames; wherein eighth layer provided with single solar frame; and wherein said solar panels (101) mounted over said solar frames (104).

8. The photovoltaic system (100) as claimed in claim 7, wherein said solar panel (101) is bifacial solar panel embedded with half cut cell technology.

9. The photovoltaic system (100) as claimed in claim 8, wherein said solar frame (103) further includes a flat stand (107), wherein said flat stand (107) provided between the left angular arm and right angular arm, and wherein said flat stand (107) configured for placing the combiner box (108) vertically upwards at the angular arm portion (106) of the solar frame (104) closer to the ring bracket (103).

10. The photovoltaic system (100) as claimed in claim 9, wherein said combiner box (108) provided vertically upwards at the angular arm portion of a single solar frame (104) at each layer, wherein said combiner box (108) at each layer configured for combining the strings from the optimizers into said output cables; and wherein said strings from the optimizers passes through the cable tray to reach the combiner box (108).

11. The photovoltaic system (100) as claimed in claim 3, wherein said predetermined distance is 3m.

12. The photovoltaic system (100) as claimed in claim 1, wherein said photovoltaic system (100) further includes a battery system (111), wherein said battery system (111) includes two battery strings with plurality of redundant batteries (112), an enclosure (113) and an air conditioning system (114).

13. The photovoltaic system (100) as claimed in claim 12, wherein said enclosure (113) includes racks and a door;
wherein said two strings of plurality of batteries fixed on the racks of the enclosure and said batteries connected using battery jumpers; and
wherein said air conditioning system (114) placed in the door of the enclosure for enhancing the lifespan of the batteries.

14. The photovoltaic system (100) as claimed in claim 13, wherein said two battery strings includes main cables and a battery cable tray; wherein said main cable from each of the battery string laid through said battery cable tray and connected to the main electrical panel.

15. The photovoltaic system (100) as claimed in claim 12, wherein said photovoltaic system (100) further includes a remote monitoring system (116) and an energy management and monitoring system (117); wherein said remote monitoring system (116) configured for monitoring the photovoltaic system (100); and wherein said energy management and monitoring system (117) configured for monitoring and collecting various data from site and making it available to users through graphics, online monitoring tools and thereby enabling the management of energy resources.

16. The photovoltaic system (100) as claimed in claim 15, wherein said remote monitoring system (116) includes a supervisory control and data acquisition system for remotely monitoring the photovoltaic system (100).

17. The photovoltaic system (100) as claimed in claim 16, wherein said energy management and monitoring system (117) includes remote terminal unit (118) configured for transmitting various data from site to said supervisory control and data acquisition system; and wherein said various data includes data related to power source system, system storage, load and site condition.

## Patentansprüche

1. Eine Photovoltaikanlage (100) zur Bereitstellung einer vollständigen autonomen Stromversorgung einer Basistransmitterstation, wobei die Photovoltaikanlage (100) umfasst:
Eine Vielzahl von Solarmodulen (101) und Solarrahmen (104);
**dadurch gekennzeichnet, dass**
die Photovoltaikanlage (100) ferner einen Turm (102), eine Ringhalterung (103), eine Kabelrinne, eine Kombinationsbox (108), eine Vielzahl von Optimierer, eine Kabelleiter (109) und eine elektrische Schalttafel umfasst;
wobei die Ringhalterung (103) in Schichten und um den Umfang des Turms (102) herum unter Verwendung von Befestigungsmitteln angeordnet ist;
wobei die Solarrahmen (104) an die Ringhalterungen (103) befestigt sind, die in Schichten unter Verwendung von Befestigungsmitteln angeordnet sind;
wobei das Solarmodul (101) über den Solarrahmen (104) montiert sind, die in Schichten angeordnet sind, um Gleichstrom zu erzeugen, wobei das Solarmodul (101) eine Vielzahl Photovoltaikmodule umfasst;
wobei das Solarmodul (101) über den Solarrahmen (104) auf der Grundlage einer mit einem Software-Assistenztool berechneten Ausrichtung montiert ist und dadurch den Schatteneffekt reduziert;
wobei jedes der Photovoltaikmodule mit einem Optimierer versehen ist, wobei jeder der Optimierer mit einem Kabel in Reihe geschaltet ist;
wobei die Kabelrinne näher an jeder der Ringhalterungen (103) separat angeordnet ist;
wobei sich die Kombinationsbox (108) an einem Ende des Solarrahmens (104) näher an der Ringhalterung (103) angeordnet ist;
wobei die Kabelrinne so konfiguriert ist, dass sie als Weg für die Durchführung einer Strangverbindung von Optimierern dient und dadurch den Strang mit der Kombinationsbox (108) verbindet;
wobei die Kabelleiter (109) Kabelklemmen (110) umfasst, wobei die Kabelleiter entlang des Turms angeordnet ist;
wobei die elektrische Hauptschalttafel Laderegler mit Maximum Power Point Tracking und Ausgangsladekabeln umfasst;
wobei die Kabelklemmen (110) zum Befestigen von Ausgangskabeln von jeder der Kombinationsboxen (108) über der Kabelleiter (109) vorgesehen sind und dadurch die Ausgangskabel mit den Ladereglern mit Maximum Power Point Tracking der elektrischen Schalttafel verbinden; und
wobei die Ausgangsladekabel von der elektrischen Schalttafel mit dem Eingangsanschluss der Basistransmitterstation verbunden sind und dadurch die Basistransmitterstation mit Strom versorgen.

2. Die Photovoltaikanlage (100) nach Anspruch 1, wobei das auf dem Solarrahmen (104) montierte Solarmodul (101) auf der berechneten Ausrichtung basiert, um den durch den Regenschirmeffekt im Sommer verursachten Leistungsabfall zu überwinden und den Regenschirmeffekt im Winter zu vermeiden.

3. Die Photovoltaikanlage (100) nach Anspruch 1, wobei die Ringhalterung (103) um den Turm (102) in einem vorbestimmten Abstand vom Boden angeordnet ist und dadurch die erste Schicht bildet,
wobei die Ringhalterungen (103) vertikal über der ersten Schicht in einer sequenziellen Reihenfolge von bis zu sieben Schichten angeordnet sind und dadurch die zweite Schicht, dritte Schicht, vierte Schicht, fünfte Schicht, sechste Schicht, siebte Schicht und achte Schicht bilden, und wobei die Ringhalterung (103) in jeder Schicht des Turms durch einen vorbestimmten Abstand voneinander getrennt ist.

4. Die Photovoltaikanlage nach Anspruch 3, wobei die Ringhalterung (103) in jeder Schicht eine Grundplatte (103(a)) und eine Deckplatte (103(b)) umfasst; und wobei der Solarrahmen (104) zwischen der Grundplatte (103(a)) und der Deckplatte (103(b)) der Ringhalterung (103) unter Verwendung von Befestigungsmitteln angebracht ist.

5. Die Photovoltaikanlage (100) nach Anspruch 4, wobei der Solarrahmen (104) in jeder Schicht einen Winkelarmabschnitt (106) und einen Hauptkörper (105) umfasst, wobei der Winkelarmabschnitt (106) einen linken Winkelarm und einen rechten Winkelarm umfasst,
wobei ein Ende des linken und rechten Winkelarms am Hauptkörper (105) des Solarrahmens (104) befestigt ist und das gegenüberliegende Ende des linken und rechten Winkelarms des Winkelarmabschnitts (106) des Solarrahmens (104) zwischen der Grundplatte (103(a)) und der Deckplatte (103(b)) der Ringhalterungen (103) angebracht ist.

6. Die Photovoltaikanlage (100) gemäß Anspruch 5, wobei der Solarrahmen (104) in jeder Schicht die Form einer Ventilatorblende aufweist, wobei der Hauptkörper (105) des Solarrahmens (104) in einer rechteckigen Form vorgesehen ist; und wobei das Solarmodul (101) über dem Hauptkörper (105) des Solarrahmens (104) angebracht ist.

7. Die Photovoltaikanlage (100) nach Anspruch 6, wobei die Schichten in ungerader Position mit drei Solarrahmen versehen sind; wobei die zweite Schicht, die vierte Schicht und die sechste Schicht in gerader Position mit zwei Solarrahmen versehen sind; wobei die achte Schicht mit einem einzigen Solarrahmen versehen ist; und wobei die Solarmodule (101) über den Solarrahmen (104) montiert sind.

8. Die Photovoltaikanlage (100) nach Anspruch 7, wobei das Solarmodul (101) ein zweiseitiges Solarmodul ist, das mit Halbzellen-Technologie ausgestattet ist.

9. Die Photovoltaikanlage (100) gemäß Anspruch 8, wobei der Solarrahmen (104) ferner einen flachen Ständer (107) umfasst, wobei der flache Ständer (107) zwischen dem linken Winkelarm und dem rechten Winkelarm vorgesehen ist und wobei der flache Ständer (107) so konfiguriert ist, dass die Kombinationsbox (108) vertikal nach oben am Winkelarmabschnitt (106) des Solarrahmens (104) näher an der Ringhalterung (103) vorgesehen ist.

10. Die Photovoltaikanlage (100) nach Anspruch 9, wobei die Kombinationsbox (108) vertikal nach oben am Winkelarmabschnitt eines einzelnen Solarrahmens (104) in jeder Schicht vorgesehen ist, wobei die Kombinationsbox (108) in jeder Schicht so konfiguriert ist, dass sie die Stränge von den Optimierern zu den Ausgangskabeln kombiniert; und wobei die Stränge von den Optimierern durch die Kabelrinne verlaufen, um die Kombinationsbox (108) zu erreichen.

11. Die Photovoltaikanlage (100) nach Anspruch 3, wobei der vorbestimmte Abstand 3 m beträgt.

12. Die Photovoltaikanlage (100) nach Anspruch 1, wobei die Photovoltaikanlage (100) ferner ein Batteriesystem (111) umfasst, wobei das Batteriesystem (111) zwei Batteriestränge mit einer Vielzahl redundanter Batterien (112), ein Gehäuse (113) und ein Klimatisierungssystem (114) umfasst.

13. Die Photovoltaikanlage (100) gemäß Anspruch 12, wobei das Gehäuse (113) Gestelle und eine Tür umfasst;
wobei die beiden Stränge einer Vielzahl von Batterien an den Gestellen des Gehäuses befestigt sind und die Batterien über Batteriebrücken verbunden sind;
und wobei das Klimatisierungssystem (114) in der Tür des Gehäuses angeordnet ist, um die Lebensdauer der Batterien zu verlängern.

14. Die Photovoltaikanlage (100) gemäß Anspruch 13, wobei die beiden Batteriestränge Hauptkabel und eine Batteriekabelrinne umfassen; wobei das Hauptkabel jedes Batteriestranges durch die Batteriekabelrinne verlegt und mit der elektrischen Schalttafel verbunden ist.

15. Die Photovoltaikanlage (100) nach Anspruch 12, wobei die Photovoltaikanlage (100) ferner ein Fernüberwachungssystem (116) und ein Energiemanagement- und Überwachungssystem (117) umfasst; wobei das Fernüberwachungssystem (116) zur Überwachung der Photovoltaikanlage (100) konfiguriert ist; und wobei das Energiemanagement- und Überwachungssystem (117) zum Überwachen und Sammeln verschiedener Daten vom Standort und zum Bereitstellen dieser Daten für Benutzer über Grafiken und Online-Überwachungstools konfiguriert ist, wodurch die Verwaltung von Energieressourcen ermöglicht wird.

16. Die Photovoltaikanlage (100) nach Anspruch 15, wobei das Fernüberwachungssystem (116) ein Überwachungssteuerungs- und Datenerfassungssystem zur Fernüberwachung der Photovoltaikanlage (100) umfasst.

17. Die Photovoltaikanlage (100) nach Anspruch 16, wobei das Energiemanagement- und Überwachungssystem (117) eine Fernterminaleinheit (118) umfasst, die zum Übertragen verschiedener Daten vom Standort an das Überwachungssteuerungs- und Datenerfassungssystem konfiguriert ist; und wobei die verschiedenen Daten, Daten umfassen, die sich auf das Stromversorgungssystem, den Systemspeicher, die Last und den Standortzustand beziehen.

## Revendications

1. Système photovoltaïque (100) permettant de fournir de l'énergie en toute autonomie à une station émettrice-réceptrice de base, ledit système photovoltaïque (100) comprenant :
une pluralité de panneaux solaires (101) et de cadres solaires (104) ;
**caractérisé en ce que**
ledit système photovoltaïque (100) comprend en outre une tour (102), un support annulaire (103), un chemin de câbles, une boîte de jonction (108), une pluralité d'optimiseurs, une échelle à câbles (109) et un tableau électrique principal ;
dans lequel ledit support annulaire (103) est placé en couches et de manière circonférentielle autour de la tour (102) au moyen d'éléments de fixation ;
dans lequel ledit cadre solaire (104) est fixé auxdits supports annulaires (103) placés en couches au moyen d'éléments de fixation ;
dans lequel ledit panneau solaire (101) est monté sur ledit cadre solaire (104) placé en couches afin de générer un courant électrique continu, ledit panneau solaire (101) comprenant une pluralité de modules photovoltaïques ;
dans lequel le panneau solaire (101) est monté sur ledit cadre solaire (104) selon une orientation calculée à l'aide d'un outil logiciel d'assistance, réduisant ainsi l'effet d'ombrage ;
dans lequel chaque module photovoltaïque est pourvu d'un optimiseur, chacun dudit optimiseur étant interconnecté en série au moyen d'un câble ;
dans lequel ledit chemin de câbles est placé séparément à proximité de chacun desdits supports annulaires (103) ;
dans lequel ladite boîte de jonction (108) est située à une extrémité dudit cadre solaire (104), à proximité du support annulaire (103) ;
dans lequel ledit chemin de câbles est configuré pour servir de passage à une chaîne provenant de l'optimiseur, raccordant ainsi ladite chaîne à la boîte de jonction (108) ;
dans lequel ladite échelle à câbles (109) comprend des serre-câbles (110), ladite échelle à câbles étant disposée le long de la tour ;
dans lequel ledit tableau électrique principal comprend des régulateurs de charge à suivi du point de puissance maximale et des câbles de sortie de charge ;
dans lequel lesdits serre-câbles (110) sont prévus pour fixer les câbles de sortie de chaque boîte de jonction (108) sur l'échelle à câbles (109), connectant ainsi lesdits câbles de sortie aux régulateurs de charge à suivi du point de puissance maximale du tableau électrique ; et
dans lequel lesdits câbles de charge en sortie du tableau électrique sont connectés au port d'entrée de la station émettrice-réceptrice de base, fournissant ainsi l'alimentation électrique à la station émettrice-réceptrice de base.

2. Système photovoltaïque (100) selon la revendication 1, dans lequel ledit panneau solaire (101) est monté sur le cadre solaire (104) selon l'orientation calculée pour surmonter la baisse de production due à l'effet parapluie pendant l'été et pour éviter ledit effet parapluie pendant l'hiver.

3. Système photovoltaïque (100) selon la revendication 1, dans lequel ledit support annulaire (103) est positionné autour de la tour (102) à une distance prédéterminée par rapport au niveau du sol, formant ainsi une première couche,
dans lequel lesdits supports annulaires (103) sont disposés verticalement au-dessus de la première couche dans un ordre séquentiel ascendant jusqu'à sept couches, formant ainsi une deuxième couche, une troisième couche, une quatrième couche, une cinquième couche, une sixième couche, une septième couche et une huitième couche et
dans lequel ledit support annulaire (103) de chaque couche de la tour est séparé des autres par une distance prédéterminée.

4. Système photovoltaïque selon la revendication 3, dans lequel ledit support annulaire (103) de chaque couche comprend une plaque de base (103(a)) et une plaque supérieure (103(b)), et dans lequel ledit cadre solaire (104) est monté entre la plaque de base (103(a)) et la plaque supérieure (103(b)) du support annulaire (103) au moyen d'éléments de fixation.

5. Système photovoltaïque (100) selon la revendication 4, dans lequel ledit cadre solaire (104) de chaque couche comprend une partie à bras angulaires (106) et un corps principal (105), dans lequel ladite partie à bras angulaires (106) comprend un bras angulaire gauche et un bras angulaire droit,
dans lequel une extrémité desdits bras angulaires gauche et droit est fixée audit corps principal (105) du cadre solaire (104), et l'extrémité opposée desdits bras angulaires gauche et droit de la partie à bras angulaires (106) du cadre solaire (104) est montée entre la plaque de base (103(a)) et la plaque supérieure (103(b)) des supports annulaires (103).

6. Système photovoltaïque (100) selon la revendication 5, dans lequel ledit cadre solaire (104) de chaque couche est en forme de pale de ventilateur, dans lequel ledit corps principal (105) dudit cadre solaire (104) est pourvu d'une forme rectangulaire, et dans lequel ledit panneau solaire (101) est monté sur le corps principal (105) du cadre solaire (104).

7. Système photovoltaïque (100) selon la revendication 6, dans lequel lesdites couches en position impaire comprennent trois cadres solaires, dans lequel lesdites deuxième couche, quatrième couche et sixième couche en position paire comprennent deux cadres solaires, dans lequel la huitième couche comprend un seul cadre solaire, et dans lequel lesdits panneaux solaires (101) sont montés sur lesdits cadres solaires (104).

8. Système photovoltaïque (100) selon la revendication 7, dans lequel ledit panneau solaire (101) est un panneau solaire bifacial intégrant une technologie à demi-cellules.

9. Système photovoltaïque (100) selon la revendication 8, dans lequel ledit cadre solaire (103) comprend en outre un support plat (107), dans lequel ledit support plat (107) est disposé entre le bras angulaire gauche et le bras angulaire droit, et dans lequel ledit support plat (107) est configuré pour placer la boîte de jonction (108) verticalement vers le haut au niveau de la partie à bras angulaires (106) du cadre solaire (104) plus près du support annulaire (103).

10. Système photovoltaïque (100) selon la revendication 9, dans lequel ladite boîte de jonction (108) est disposée verticalement vers le haut sur la partie à bras angulaires d'un seul cadre solaire (104) à chaque couche, dans lequel ladite boîte de jonction (108) de chaque couche est configurée pour regrouper les chaînes issues des optimiseurs dans lesdits câbles de sortie, et dans lequel lesdites chaînes issues des optimiseurs passent par le chemin de câbles pour parvenir jusqu'à la boîte de jonction (108).

11. Système photovoltaïque (100) selon la revendication 3, dans lequel ladite distance prédéterminée est de 3 m.

12. Système photovoltaïque (100) selon la revendication 1, dans lequel ledit système photovoltaïque (100) comprend en outre un système de batteries (111), dans lequel ledit système de batteries (111) comprend deux chaînes de batteries avec une pluralité de batteries redondantes (112), une enceinte (113) et un système de climatisation (114).

13. Système photovoltaïque (100) selon la revendication 12, dans lequel ladite enceinte (113) comprend des racks et une porte,
dans lequel lesdites deux chaînes de plusieurs batteries sont fixées sur les racks de l'enceinte et lesdites batteries sont connectées au moyen de câbles de liaison de batteries, et
dans lequel ledit système de climatisation (114) est disposé dans la porte de l'enceinte pour améliorer la durée de vie des batteries.

14. Système photovoltaïque (100) selon la revendication 13, dans lequel lesdites deux chaînes de batteries comprennent des câbles principaux et un chemin de câbles de batteries, dans lequel ledit câble principal de chaque chaîne de batteries est disposé à travers le chemin de câbles de batteries et connecté au tableau électrique principal.

15. Système photovoltaïque (100) selon la revendication 12, dans lequel ledit système photovoltaïque (100) comprend en outre un système de surveillance à distance (116) et un système de gestion et de surveillance de l'énergie (117), dans lequel ledit système de surveillance à distance (116) est configuré pour surveiller le système photovoltaïque, (100), et dans lequel ledit système de gestion et de surveillance de l'énergie (117) est configuré pour surveiller et collecter de diverses données sur le site et les rendre disponibles aux utilisateurs via des graphiques et des outils de surveillance en ligne, permettant ainsi la gestion des ressources énergétiques.

16. Système photovoltaïque (100) selon la revendication 15, dans lequel ledit système de surveillance à distance (116) comprend un système de supervision et d'acquisition de données pour surveiller à distance le système photovoltaïque (100).

17. Système photovoltaïque (100) selon la revendication 16, dans lequel ledit système de gestion et de surveillance de l'énergie (117) comprend une unité terminale distante (118) configurée pour transmettre diverses données du site audit système de supervision et d'acquisition de données, et dans lequel lesdites données comprennent des données relatives au système de source d'énergie, au stockage du système, à la charge et à l'état du site.
